(19) Europäisches Patentamt
European Patent Office
Office européen des brevets

(11) EP 1 464 194 B1

(12) **EUROPEAN PATENT SPECIFICATION**

(45) Date of publication and mention
of the grant of the patent:
**17.06.2009 Bulletin 2009/25**

(21) Application number: **02793650.9**

(22) Date of filing: **16.12.2002**

(51) Int Cl.:
***H04W 64/00*** *(2009.01)*

(86) International application number:
**PCT/SE2002/002335**

(87) International publication number:
**WO 2003/056858 (10.07.2003 Gazette 2003/28)**

(54) **PROCEDURE AND ARRANGEMENT FOR CALCULATION OF DISTANCES**

PROZEDUR UND ANORDNUNG ZUR BERECHNUNG VON DISTANZEN

PROCEDE ET DISPOSITIF SERVANT A CALCULER DES DISTANCES

(84) Designated Contracting States:
**AT BE BG CH CY CZ DE DK EE ES FI FR GB GR
IE IT LI LU MC NL PT SE SI SK TR**
Designated Extension States:
**LT LV**

(30) Priority: **21.12.2001 SE 0104367**

(43) Date of publication of application:
**06.10.2004 Bulletin 2004/41**

(73) Proprietor: **TELIASONERA AB
106 63 Stockholm (SE)**

(72) Inventor: **STENFELT, John
S-114 20 Stockholm (SE)**

(74) Representative: **Hopfgarten, Nils et al
Groth & Co.KB
P.O. Box 6107
102 32 Stockholm (SE)**

(56) References cited:
**AU-B- 741 491            US-B1- 6 263 208**

## Description

### TECHNICAL FIELD

The present invention relates to a procedure and arrangement for calculation of distances between a user located in an area and a given point. More exactly the invention relates to a procedure which can be used in a telecommunication system to provide a probable value of the distance between the user and the given point. By dividing the area in smaller parts or positions, the invention can calculate a statistical representative value of the distance.

### PRIOR ART

It is since earlier known to locate mobiles in telecommunication systems. Service providers can then base services on the position of the mobile. In the earlier technology the position of the mobile is considered to be determined as a latitude and a longitude, that is a point, or as a cell or a part of a cell. The nearness to given points then has been determined by starting from the determined point or center to the area where the mobile is located.

As examples of earlier known technology we refer to US 5,390,339, US 5,293,642, US 5,884,215, US 6,097,336 which describe methods for locating mobile terminals in a telecommunication system. Based on, among other things, signal quality measurements, a probability distribution is made over the position of the terminal.

As further examples of earlier known technology we refer to WO 01/43482, WO 00/19743, WO 01/26393, which describe methods for locating mobile terminals in a telecommunication systems to provide position based services.

In AU 741 491 a method is described for determining the distance between a mobile phone located in a cellular area and a base station, based on round-trip delay of a prescribed message transmitted form a base station to the mobile phone in a cellular mobile telephone system. Distances between different measuring positions of the mobile phone in the cell and the base station are measured. These distances are also determined from GPS position data, and a computed mean error distance is used to correct the measured distance to the base station.

None of these documents deals however, with the problem to give a user an absolute value of the distance between the user and a given point which is reliable with a certain probability. The invention only makes use of knowledge about the geographical extent of the located area and a probable distribution of position for the user.

### SUMMARY OF THE INVENTION

The invention thus provides a procedure for calculation of distances between a user located in an area and a given point.

According to the invention, the following steps are then performed:

> to create a representation of the area with a number of discrete positions;
> to calculate the distances ($d_i \in D$) between discrete positions and the given point;
> to create or derive a distribution of positions ($x_i \in X$) for the user, connected to the representation of the area; and
> to calculate a statistical representative central value from the distances and the distribution of positions ($k_i$).

The invention also relates to a corresponding arrangement, and computer program and a medium on which the computer program is stored.

The invention is defined in the independent claims 1 and 13, whereas embodiments are presented in the dependent claims.

The invention consequently solves the problem by taking into consideration the geographical extent of the whole located area and a probable distribution of positions for the user. The advantage is that a user will have reliable information about the distance from himself/herself to a given point.

### BRIEF DESCRIPTION OF THE DRAWING

The invention will be described more in detail in the following with reference to enclosed drawing, in which

> Figure 1A and 1B show a circular cell and a sector-shaped cell,
> and
> Figure 2A and 2B show respective parts of a circular cell and a sector-shaped cell.

### DESCRIPTION OF PREFERRED EMBODIMENTS

Generally the invention relates to procedures to calculate a distance between a user located in an area and a given point. The invention can with advantage be used in systems which provide position based services for mobile terminals. Today there exist systems and procedures to locate users in mobile telecommunication systems. The location as such does not constitute any part of the present invention. The given point can represent a shop, a gas station, a pharmacy or similar places which the user wants to visit to get a service or buy a commodity etc. It is assumed that the position of the given point is entered into a database in the telecommunication system. This position is in general fixed and there are no problems to indicate or find its positions.

It is becoming more and more common with position based services to mobile telephones. Examples of this is Telia's Mobile service "Gula Sidorna Nära Dig" by the help of which one in an easy way can get information about closely located hotels, restaurants etc. by means of GSM-positioning.

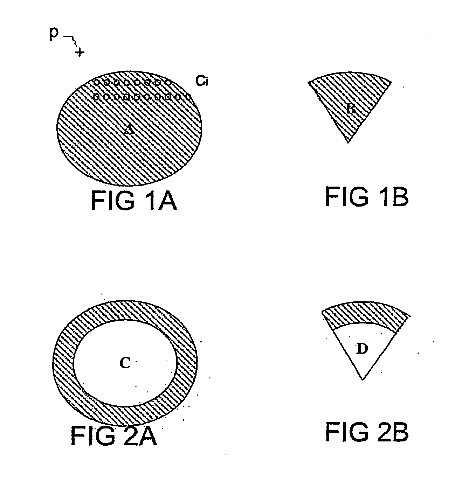

Position based services for mobile terminal for mobile terminals are today chiefly based on GSM (in Europe) and corresponding mobile communication systems. Unfortunately the accuracy for positioning by means of this type of network is rather limited. Especially two technologies are today used to position GSM-telephones: Cell-ID and Timing Advance (TA). For Cell ID applies that the user's position can be calculated to the cell in which the user is at the time (=cell identity) with an accuracy corresponding to the size of the cell. Figure 1 shows ordinary cells, a circular cell (A) and a sector-shaped cell (B).

For TA the user's position in similar can way be determined with an accuracy corresponding to the TA-value which the user at the time has in the cell. TA gives a measure of the distance between the user and the antenna of the base station, but not the direction. This divides the cell into smaller parts which are located at corresponding distance intervals. Figure 2 shows example of a part of a circular cell (C) and a part of a sector-shaped cell (D).

The positioning or finding of position provides no further information about where in the determined area the user is. Based on other information, for instance statistics regarding users movement pattern and radio wave propagation in the area, however, it will be possible to allocate different probabilities for that the user is at different places in the area. It provides a distribution of positions which is utilized in one embodiment of the invention.

It is easy to think of many different services which utilize the knowledge about the distance to an object located or placed in a point (p). See Figure 1. The objects most frequently are outside the cell, but may also be at the edge or even within it.

A conventional method which is used to estimate the distance to a known point (called $p$) by means of positioning is to calculate the distance between $p$ and the center of the shaded area in A, B, C or D (depending on which method that is used). This method, however, is in no way optimal and points out a need for more sophisticated methods.

Embodiments of the invention show efficient methods to determine or find out the distance to a known place from a positioned area of type A, B, C or D. The method is based on that the distance searched for is calculated for a larger number of points in the area in which the terminal is. The points preferably are uniformly distributed. These points after that can be weighted according to some applicable distribution of positions. In this way a sophisticated statistic estimation of the distance to the point can be made.

Preferably two measures of distances should be used. Either the arithmetical average of the distance to the point $p$ for all points in the area is used, which is comparatively uncomplicated to calculate, or the median value of the distance is used. The median value here is advantageous to use, because the distance with 50% chance is shorter than the one that has been indicated. In the same way it is of course also 50% chance that the distance is longer. This is a fact which would be easy for a user to realize. Simulation of the method also shows that the median value more frequently achieves somewhat better than the average value measure does. By conventional methods one will have no control over how reliable the distance information is.

Let $K$ be the area in which the user has been positioned. $K$ can have just any, describable form, for instance the form of any of the shaded areas in Figure 1 or Figure 2.

Further let

$C = \{c_1, c_2,, \cdots, c_{Tm}\}$ be a discrete representation of $K$ consisting of $Tm$ uniformly distributed points in $K$. In Figure 1A some points are marked or indicated.

Then calculate the distances from the user to the point p $D = \{d_1, d_2, \cdots, d_{Tm}\} = \{|c_1 - p|, |c_2 - p|, ..., |c_{Tm} - p|\}$ where $p$ is the point to which the distance is searched for. Assume that the user's probable position in $C$ is described by the distribution of positions $X = \{x_1, x_2,, ..., x_{Tm}\}$, where x is the probability that the user is at a position in C. (For instance indoor environments, urban areas and rural areas usually generate different distributions due to that the radio waves are reflected against different objects). The statistical, representative central distance searched for then is equal to the average distance, that is:

$$m_{central} = m_{Average} = \sum_{i=1}^{T_m} x_i \, d_i$$

In order to simplify the calculation, a uniform distribution of positions can be assumed (all $x_i$ equal). This results in that:

$$m_{central} = m_{Average} = \frac{1}{Tm} \sum_{i=1}^{T_m} d_i$$

In order to find out the median distance, $D$ first has to be sorted in order of size. This results in the arranged amount $D_{arranged}$ which includes the same elements as $D$, but with another indexing.

$$h = \sum_{i=1}^{\zeta} x_{v_i}$$

Let this indexing be represented by the vector $V = \{v_1, v_2, ..., v_{Tm}\}$. Then sum up:

where $\zeta$ is an integer such that $h$ is closer to 0,5 than for all other possible values of $\zeta$. The statistical representative central distance searched for then will be equal to the median value, that is:

$$m_{central} = m_{Median} = d_{\zeta}$$

If $h$ is just as close to 0,5 for two subsequent values of $\zeta$, which are here designated $\zeta_1$ and $\zeta_2$, the median value instead will be:

$$m_{central} = m_{Median} = \frac{d_{\zeta_1} + d_{\zeta_2}}{2}$$

In order to simplify the calculation a uniform distribution of positions can be assumed (all $x_i$ are equal). This results in that:

$$\zeta = \frac{Tm + 1}{2}$$

for all odd values of $Tm$ and:

$$\zeta_1 = \frac{Tm}{2} \quad , \quad \zeta_2 = \frac{Tm + 2}{2}$$

for all even values of $Tm$.

In order to implement the invention, for instance in a telecommunication system, a database is needed arranged to store a representation (C) of the area (K) and a distribution of positions (X) for the user, connected to the representation (C) of the area. In addition there is needed a calculation device to calculate the statistical representative central value ($m_{central}$) from the distances ($d_k$) by means of the above shown formulas.

The calculation device preferably is a computer programmed with an algorithm which can execute the above mentioned operations and calculations. The database can be internal or external. If a suitable computer is included in an existing telecommunication system, the computer program can be installed from a medium such as CD-ROM and diskette.

An advantage with the invention is that it takes into consideration the geographical extent of the whole located area and a probable distribution of positions for the user. By that, the user will have reliable information about the distance from himself/herself to a given point.

The invention can be used in all types of cellular networks, for instance in GSM-networks, which make use of similar positioning technologies.

**Claims**

1. Procedure for calculation of distances between a mobile communications user located in an area (K) and a given point (p),
**characterized in** the steps:
to determire that the use is located within the area (K);

to create a representation (C) of the area (K) with a number of discrete positions ($c_i$);
to calculate the distances ($d_i \in D$) between discrete positions ($c_i$) and the given point (p);
to create or derive a distribution of positions ($x_i \in X$) for the user, connected to the representation (C) of the area; and
to calculate a statistical representative central value ($m_{central}$) from the distances ($d_k$) and the distribution of positions ($x_k$).

2. Procedure as claimed in claim 1,
**characterized in that** the discrete positions ($c_i$) are uniformly distributed in the area (K).

3. Procedure as claimed in claim 1 or 2,
**characterized in that** the central value is calculated as an arithmetical average value of the distances ($d_i$) weighted by the distribution of positions (X) for the user.

4. Procedure as claimed in claim 3,
**characterized in that** the central value is calculated as:

$$m_{central} = m_{Average} = \sum_{i=1}^{T_m} x_i \, d_i$$

where $T_m$ is the number of positions in C.

5. Procedure as claimed in claim 1 or 2,
**characterized in that** the central value is calculated as the median value of the distances ($d_i$).

6. Procedure as claimed in claim 5,

**characterized in that** the central value is calculated by

sorting the amount $D$ in order of size to create the arranged amount $D_{arranged}$ with an indexing which is represented by the vector $V = \{v_1, v_2, ..., v_{Tm}\}$,

$$h = \sum_{i=1}^{\zeta} x_{v_i}$$

to then sum up:

where $\zeta$ is an integer such that $h$ is closer to 0,5 than for all other possible values of $\zeta$, and to create the central value as

$$m_{central} = m_{Median} = d_{\zeta}$$

or, if $h$ is as close to 0,5 for two subsequent values of $\zeta$, which are here designated $\zeta_1$ and $\zeta_2$, to create the central value as:

$$m_{central} = m_{Median} = \frac{d_{\zeta_1} + d_{\zeta_2}}{2}$$

**7.** Procedure as claimed in claim 2,
**characterized in that** the distribution of positions (X) for the user is set uniformly for the whole representation (C) of the area (K).

**8.** Procedure as claimed in claim 7,
**characterized in that** the central value is calculated as an arithmetical average value of the distances ($d_i$).

**9.** Procedure as claimed in claim 8,
**characterized in that** the central value is calculated as

$$m_{central} = m_{Average} = \frac{1}{Tm} \sum_{i=1}^{T_m} d_i$$

where $T_m$ is the number of positions in C.

**10.** Procedure as claimed in claim 7,
**characterized in that** the central value is calculated as the median value of the distances ($d_i$).

**11.** Procedure as claimed in claim 10,
**characterized in that** the central value is calculated by sorting the amount $D$ in order of size to create the arranged amount $D_{arranged}$ by an indexing which is represented by the vector $V = \{v_1, v_2,..., v_{Tm}\}$, and to create the central value as

$$m_{central} = m_{Median} = d_{\zeta}$$

where $\zeta$ is an integer such that

$$\zeta = \frac{Tm + 1}{2}$$

for all odd values of $Tm$, and
to create the central value as:

$$m_{central} = m_{Median} = \frac{d_{\zeta_1} + d_{\zeta_2}}{2}$$

$$\zeta_1 = \frac{Tm}{2} \quad , \quad \zeta_2 = \frac{Tm + 2}{2}$$

for all even values of $Tm$ and
where $T_m$ is the number of positions in C.

**12.** Procedure as claimed in any of the previous claims,
**characterized in that** the area (K) has the form of either a circular cell, a. sector-shaped cell, a part of a circular cell, or a part of a sector-shaped cell.

**13.** Arrangement for calculation of distances between a mobile communications user located in an area (K) and a given point (p),
**characterized by**
means for determining that the user is within the area (K);
a database arranged to store a representation (C) of the area (K) with a number of discrete positions ($c_i$) and a distribution of positions ($x_i \in X$) for the user, connected to the representation (C) of the area; and a calculation device to calculate the distances ($d_i \in D$) between discrete positions ($c_i$) and the given point (p) and to calculate a statistical representative central value ($m_{cential}$) from the distances ($d_k$) and the distribution of positions ($x_k$).

**14.** Arrangement as claimed in claim 13,
**characterized in that** the discrete positions ($c_i$) are uniformly distributed in the area (K).

**15.** Arrangement as claimed in claim 13 or 14, **characterized in that** the calculation device is arranged to calculate the central value as an arithmetical average value of the distances ($d_i$) weighted by the distribution of positions (X) for the user.

**16.** Arrangement as claimed in claim 15, **characterized in that** the calculation device is arranged to calculate the central value as

$$m_{central} = m_{Average} = \sum_{i=1}^{T_m} x_i \, d_i$$

where $T_m$ is the number of positions in C.

**17.** Arrangement as claimed in claim 13 or 14, **characterized in that** the calculation device is arranged to calculate the central value as the median value of the distances ($d_i$).

**18.** Arrangement as claimed in claim 17, **characterized in that** the calculation device is arranged to calculate the central value by sorting the amount $D$ in order of size to create the arranged amount $D_{arranged}$ with an indexing which is represented by the vector $V = \{v_1, v_2, ..., V_{Tm}\}$, to after that sum up:

$$h = \sum_{i=1}^{\zeta} x_{v_i}$$

where $\zeta$ is an integer such that $h$ is closer to 0,5 than for all other possible values of $\zeta$, and to create the central value as

$$m_{central} = m_{Median} = d_{\zeta}$$

or, if $h$ has the same proximity to 0,5 for two subsequent values of $\zeta$, which here are designated $\zeta_1$ and $\zeta_2$, to create the central value as

$$m_{central} = m_{Median} = \frac{d_{\zeta_1} + d_{\zeta_2}}{2}$$

**19.** Arrangement as claimed in claim 13 or 14, **characterized in that** the distribution of positions (X) for the user is uniform for the whole representation (C) of the area (K).

**20.** Arrangement as claimed in claim 19,

**characterized in that** the calculation device is arranged to calculate the central value as an arithmetical average value of the distances ($d_i$).

**21.** Arrangement as claimed in claim 20, **characterized in that** the calculation device is arranged to calculate the central value as

$$m_{central} = m_{Average} = \frac{1}{Tm} \sum_{i=1}^{T_m} d_i$$

where $T_m$ is the number of positions in C.

**22.** Arrangement as claimed in claim 19, **characterized in that** the calculation device is arranged to calculate the central value as the median value of the distances ($d_i$).

**23.** Arrangement as claimed in claim 22, **characterized in that** the calculation device is arranged to calculate the central value by sorting the amount $D$ in order of size to create the arranged amount $D_{arranged}$ with an indexing which is represented by the vector $V = \{v_1, v_2, ..., v_{Tm}\}$, and to create the central value as

$$m_{central} = m_{Median} = d_{\zeta}$$

where $\zeta$ is an integer such that

$$\zeta = \frac{Tm + 1}{2}$$

for all odd values of $Tm$ and to create the central value as

$$m_{central} = m_{Median} = \frac{d_{\zeta_1} + d_{\zeta_2}}{2}$$

$$\zeta_1 = \frac{Tm}{2} \quad , \quad \zeta_2 = \frac{Tm + 2}{2}$$

for all even values of $Tm$; and
$T_m$ is the number of positions in C.

24. Arrangement as claimed in any of the patent claims 13 to 23, **characterized in that** the area (K) has the form of either a circular cell, a sector-shaped cell, a part of a circular cell, or a part of a sector-shaped cell.

25. Computer program in an arrangement for calculation of distances between a user located to an area (K) and a given point (p), **characterized in that** it comprises software codes adapted to perform the steps of the procedure according to any of the claims 1 to 12.

26. Medium for computer program, **characterized in that** it stores a computer program according to claim 25.

**Patentansprüche**

1. Verfahren zum Berechnen von Entfernungen zwischen einem Benutzer von mobiler Kommunikation, der sich in einem Gebiet (K) und an einem vorgegebenen Punkt (p) befindet, **gekennzeichnet durch** die Schritte:

> zu bestimmen, dass der Benutzer innerhalb des Gebiets (K) ist;
> eine Darstellung (C) des Gebietes (K) mit einer Anzahl von diskreten Positionen ($c_i$) zu schaffen;
> die Entfernungen ($d_i \in D$) zwischen diskreten Positionen ($c_i$) und dem gegebenen Punkt (p) zu berechnen;
> eine Verteilung von Positionen ($x_i \in X$) für den Benutzer zu schaffen oder abzuleiten, verbunden mit der Darstellung (C) des Gebiets; und
> einen statistischen repräsentativen Mittelwert ($m_{central}$) von den Entfernungen ($d_k$) und der Verteilung von Positionen ($x_k$) zu berechnen.

2. Verfahren nach Anspruch 1, **dadurch gekennzeichnet, dass** die diskreten Positionen ($c_i$) gleichförmig in den Gebiet (K) verteilt sind.

3. Verfahren nach Anspruch 1 oder 2, **dadurch gekennzeichnet, dass** der Mittelwert als ein arithmetischer Durchschnittswert der Entfernungen ($d_i$), gewichtet durch die Verteilung von Positionen (X) für den Benutzer berechnet wird.

4. Verfahren nach Anspruch 3, **dadurch gekennzeichnet, dass** der Mittelwert berechnet wird als:

$$m_{central} = m_{Average} = \sum_{i=1}^{T_m} x_i \, d_i$$

wobei $T_m$ die Anzahl von Positionen in C ist

5. Verfahren nach Anspruch 1 oder 2, **dadurch gekennzeichnet, dass** der Mittelwert als der Medianwert der Entfernungen ($d_i$) berechnet wird.

6. Verfahren nach Anspruch 5, **dadurch gekennzeichnet, dass** der Mittelwert **dadurch** berechnet wird, dass die Menge $D$ in der Reihenfolge der Größe sortiert wird, um die angeordnete Menge $D_{arranged}$ mit einer Indexierung zu schaffen, die durch den Vektor $V=\{V_1, V_2,..., V_{Tm}\}$ dargestellt wird,

$$h = \sum_{i=1}^{\zeta} x_{v_i}$$

um dann aufzusummieren:

> wobei $\zeta$ eine ganze zahl ist, dass $h$ näher zu 0,5 als für alle anderen möglichen Wert von $\zeta$ st, und den Mittelwert zu erzeugen als

$$m_{central} = m_{Median} = d_{\zeta}$$

> oder, wenn $h$ gleichweit zu 0,5 für zwei aufeinanderfolgende Werte von $\zeta$ ist, die hier als $\zeta_1$ und $\zeta_2$ bezeichnet werden, den Mittelwert zu erzeugen als:

$$m_{central} = m_{Median} = \frac{d_{\zeta_1} + d_{\zeta_2}}{2}$$

7. Verfahren nach Anspruch 2, **dadurch gekennzeichnet, dass** die Verteilung von Positionen (x) für den Benutzer gleichförmig für die gesamte Darstellung (C) des Gebiets (K) eingestellt wird.

8. Verfahren nach Anspruch 7, **dadurch gekennzeichnet, dass** der Mittelwert als ein arithmetischer Durchschnittswert der Entfernungen ($d_i$) berechnet wird.

9. Verfahren nach Anspruch 8, **dadurch gekennzeichnet, dass** der Mittelwert berechnet wird als

$$m_{central} = m_{Average} = \frac{1}{Tm} \sum_{i=1}^{T_m} d_i$$

wo $T_m$ die Anzahl von Positionen in C ist

**10.** Verfahren nach Anspruch 7, **dadurch gekennzeichnet, dass** der Mittelwert als der Medianwert der Entfernungen ($d_i$) berechnet wird.

**11.** Verfahren nach Anspruch 10, **dadurch gekennzeichnet, dass** der Mittelwert **dadurch** berechnet wird, dass die Menge $D$ in der Reihenfolge der Größe sortiert wird, um die angeordnete Menge $D_{arranged}$ durch eine Indexierung zu erzeugen, die durch den Vektor $V=\{v_1, v_2,..., v_{Tm})\}$ dargestellt wird, und den Mittelwert zu erzeugen als

$$m_{central} = m_{Median} = d_\varsigma$$

wobei $\zeta$ eine ganze Zahl ist, so dass

$$\varsigma = \frac{Tm + 1}{2}$$

für alle ungeraden Werte von Tm, und den Mittelwert zu erzeugen als

$$m_{central} = m_{Median} = \frac{d_{\varsigma_1} + d_{\varsigma_2}}{2}$$

$$\varsigma_1 = \frac{Tm}{2} \quad , \quad \varsigma_2 = \frac{Tm + 2}{2}$$

für alle geraden Werte von *Tm*, und wobei $T_m$ die Anzahl von Positionen in C ist.

**12.** Verfahren nach einem der vorangehenden Ansprüche, **dadurch gekennzeichnet, dass** das Gebiet (K) die Form entweder einer kreisförmigen Zelle, einer sektorförmigen Zelle, eines Teils einer kreisförmigen Zelle oder eines Teils einer sektorförmigen Zelle hat.

**13.** Anordnung zur Berechnung von Entfernungen zwischen einem Benutzer mobiler Telekommunikation, der in einem Gebiet (K) und an einem vorgegebenen Punkt (p) angeordnet ist, **gekennzeichnet durch** Mittel zum Bestimmen, dass der Benutzer sich innerhalb des Gebiets (K) befindet; eine Datenbank, die dazu ausgebildet ist, eine Darstellung (C) des Gebiets (K) mit einer Anzahl von diskreten Positionen ($c_i$) und einer Verteilung von Positionen ($x_i \in X$) für den Benutzer zu speichern, verbunden mit der Darstellung (C) des Gebiets; und eine Berechnungseinheit, um die Entfernungen ($d_i \in D$) zwischen diskreten Positionen ($c_i$) und dem vorgegebenen Punkt (p) zu berechnen und einen statistischen repräsentativen Mittelwert ($m_{central}$) von den Entfernungen ($d_k$) und der Verteilung von Positionen ($x_k$) zu berechnen.

**14.** Anordnung nach Anspruch 13, **dadurch gekennzeichnet, dass** die diskreten Positionen ($c_i$) gleichförmig im Gebiet (K) verteilt sind.

**15.** Anordnung nach Anspruch 13 oder 14, **dadurch gekennzeichnet, dass** die Berechnungseinrichtung dazu ausgebildet ist, den Mittelwert als einen arithmetische Durchschnittswert der Entfernungen ($d_i$), gewichtet durch die Verteilung von Positionen (X) für den Benutzer, zu berechnen.

**16.** Anordnung nach Anspruch 15, **dadurch gekennzeichnet, dass** die Berechnungseinrichtung dazu ausgebildet ist, den Mittelwert zu berechnen als

$$m_{central} = m_{Average} = \sum_{i=1}^{T_m} x_i d_i$$

wobei $T_m$ die Anzahl von Positionen in C ist.

**17.** Anordnung nach Anspruch 13 oder 14, **dadurch gekennzeichnet, dass** die Berechnungseinrichtung dazu ausgebildet ist, den Mittelwert als den Medianwert der Entfernungen ($d_i$) zu berechnen.

**18.** Anordnung nach Anspruch 17, **dadurch gekennzeichnet, dass** die Berechnungseinrichtung dazu ausgebildet ist, den Mittelwert **dadurch** zu berechnen, dass die Menge D in der Reihenfolge der Größe sortiert wird, um die angeordnete Menge $D_{arranged}$ mit einer Indexierung zu erzeugen, die durch den Vektor $V = \{v_1, v_2, ..., v_{Tm})$ dargestellt wird, um danach aufzusummieren:

$$h = \sum_{i=1}^{\varsigma} x_{v_i}$$

wobei $\zeta$ eine ganze Zahl ist, so dass $h$ näher zu 0,5 als für alle anderen möglichen Werte von $\zeta$ ist, und den Mittelwert zu erzeugen als

$$m_{central} = m_{Median} = d_\varsigma$$

oder, wenn $h$ dieselbe Nähe zu 0,5 für zwei aufein-

anderfolgende Werte von $\zeta$ hat, die hier als $\zeta_1$ und $\zeta_2$ bezeichnet werden, den Mittelwert zu erzeugen als

$$m_{central} = m_{Median} = \frac{d_{\zeta_1} + d_{\zeta_2}}{2}$$

**19.** Anordnung nach Anspruch 13 oder 14, **dadurch gekennzeichnet, dass** die Verteilung der Positionen (X) für den Benutzer für die gesamte Darstellung (C) des Gebietes (K) gleichförmig ist.

**20.** Anordnung nach Anspruch 19, **dadurch gekennzeichnet, dass** die Berechnungseinrichtung dazu ausgebildet ist, den Mittelwert als einen arithmetischen Durchschnittswert der Entfernungen ($d_i$) zu berechnen.

**21.** Anordnung nach Anspruch 20, **dadurch gekennzeichnet, dass** die Berechnungseinheit dazu ausgebildet ist, den Mittelwert zu berechnen als

$$m_{central} = m_{Average} = \frac{1}{Tm} \sum_{i=1}^{T_m} d_i$$

wobei $T_m$ die Anzahl von Positionen in C ist

**22.** Anordnung nach Anspruch 19, **dadurch gekennzeichnet, dass** die Berechnungseinrichtung dazu ausgebildet ist, den Mittelwert als den Medianwert der Entfernungen ($d_i$) zu berechnen.

**23.** Anordnung nach Anspruch 22, **dadurch gekennzeichnet, dass** die Berechnungseinheit dazu ausgebildet ist, den Mittelwert durch Sortieren der Menge $D$ in der Reihenfolge der Größe zu berechnen, um die angeordnete Menge $D_{arranged}$ mit einer Indexierung zu schaffen, die durch den Vektor V = {$v_1$, $v_2$, ..., $v_{Tm}$} dargestellt wird, und den Mittelwert zu erzeugen als

$$m_{central} = m_{Median} = d_{\zeta}$$

wobei $\zeta$ eine ganze Zahl ist, so dass

$$\zeta = \frac{Tm + 1}{2}$$

für alle ungeraden Werte von $Tm$, und den Mittelwert zu erzeugen als

$$m_{central} = m_{Median} = \frac{d_{\zeta_1} + d_{\zeta_2}}{2}$$

$$\zeta_1 = \frac{Tm}{2} \quad , \quad \zeta_2 = \frac{Tm + 2}{2}$$

für alle geraden Werte von Tm; und wobei $T_m$ die Anzahl von Positionen in C ist.

**24.** Anordnung nach einem der Patentansprüche 13 bis 23, **dadurch gekennzeichnet, dass** das Gebiet (K) die Form entweder einer kreisförmigen Zelle, einer sektorförmigen Zelle, eines Teils einer kreisförmigen Zelle oder eines Teils einer sektorförmigen Zelle hat.

**25.** Computerprogramm in einer Anordnung für die Berechnung von Entfernungen zwischen einem Benutzer, der in einem Gebiet (K) angeordnet ist, und einem vorgegebenen Punkt (p), **dadurch gekennzeichnet, dass** es Softwarecodes aufweist, die dazu ausgebildet sind, die Schritte des Verfahrens gemäß einem der Ansprüche 1 bis 12 auszuführen.

**26.** Medium für ein Computerprogramm, **dadurch gekennzeichnet, dass** es ein Computerprogramm gemäß Anspruch 25 speichert.

**Revendications**

**1.** Procédure pour calculer des distances entre un utilisateur de communications mobiles situé dans une zone (K) et un point donné (p), **caractérisée par** les étapes consistant à :

déterminer que l'utilisateur est situé dans la zone (K) ;
créer une représentation (C) de la zone (K) avec un certain nombre de positions discrètes ($c_i$) ;
calculer les distances ($d_i \in D$) entre les positions discrètes ($c_i$) et le point donné (p);
créer ou dériver une distribution de positions ($x_i \in X$) pour l'utilisateur, connectée à la représentation (C) de la zone ; et
calculer une valeur centrale représentative statistiquement ($m_{central}$) à partir des distances ($d_k$) et de la distribution de positions ($x_k$).

**2.** Procédure selon la revendication 1, **caractérisée en**

**ce que** les positions discrètes ($c_i$) sont distribuées uniformément dans la zone (K).

3. Procédure selon la revendication 1 ou 2, **caractérisée en ce que** la valeur centrale est calculée comme une valeur moyenne arithmétique des distances ($d_i$) pondérées par la distribution des positions (X) pour l'utilisateur.

4. Procédure selon la revendication 3, **caractérisée en ce que** la valeur centrale est calculée comme :

$$m_{central} = m_{moyen} = \sum_{i=1}^{T_m} x_i d_i$$

où $T_m$ est le nombre de positions dans C.

5. Procédure selon la revendication 1 ou 2, **caractérisée en ce que** la valeur centrale est calculée comme la valeur médiane des distances ($d_i$).

6. Procédure selon la revendication 5, **caractérisée en ce que** la valeur centrale est calculée en triant le montant D d'un ordre de taille à créer le montant ordonné $D_{ordonné}$ avec un indexage qui est représenté par le vecteur $V = \{v_1, v_2, ..., V_{Tm}\}$,

$$h = \sum_{i=1}^{\zeta} x_{v_i}$$

à sommer alors ;
où $\zeta$ est un entier tel que h est plus près de 0,5 que pour toutes les autres valeurs possibles de $\zeta$, et créer la valeur centrale comme :

$$m_{central} = m_{médian} = d_\zeta$$

ou, si h est tout aussi proche de 0,5 pour deux valeur subséquentes de $\zeta$, qui sont désignées ici $\zeta_1$ et $\zeta_2$, créer la valeur centrale comme :

$$m_{central} = m_{médian} = \frac{d_{\zeta_1} + d_{\zeta_2}}{2}$$

7. Procédure selon la revendication 2, **caractérisée en ce que** la distribution de positions (X) pour l'utilisateur est disposée uniformément pour rentière représentation (C) de la zone (K).

8. Procédure selon la revendication 7, **caractérisée en ce que** la valeur centrale est calculée comme une valeur moyenne arithmétique des distances ($d_i$).

9. Procédure selon la revendication 8, **caractérisée en ce que** la valeur centrale est calculée comme :

$$m_{central} = m_{moyen} = \frac{1}{Tm} \sum_{i=1}^{T_m} d_i$$

où Tm est le nombre de positions dans C.

10. Procédure selon la revendication 7, **caractérisée en ce que** la valeur centrale est calculée comme la valeur médiane des distances ($d_i$).

11. Procédure selon la revendication 10**, caractérisée en ce que** la valeur centrale est calculée en triant le montant D d'un ordre de taille à créer le montant ordonné $D_{ordonné}$ avec un indexage qui est représenté par le vecteur $V = \{v_1, v2, ..., v_{Tm}\}$, et créer la valeur centrale comme :

$$m_{central} = m_{médian} = d_\zeta$$

où $\zeta$ est un entier tel que

$$\zeta = \frac{Tm + 1}{2}$$

pour toutes les valeurs impaires de Tm, et créer la valeur centrale comme :

$$m_{central} = m_{médian} = \frac{d_{\zeta_1} + d_{\zeta_2}}{2}$$

$$\zeta_1 = \frac{Tm}{2}, \zeta_2 = \frac{Tm + 2}{2}$$

pour toutes les valeurs paires de Tm et où $T_m$ est le nombre de positons dans C.

12. Procédure selon l'une quelconque des revendications précédentes, **caractérisée en ce que** la zone (K) a la forme d'une cellule circulaire, d'une cellule en forme de secteur, d'une partie de cellule circulaire, ou d'une partie de cellule en forme de secteur.

**13.** Disposition pour le calcul de distances entre un utilisateur de communication mobiles situé dans une zone (K) et un point donné (p), **caractérisée par** des moyens pour déterminer que l'utilisateur est à l'intérieur de la zone (K) ; une base de données disposée pour stocker une représentation (C) de la zone (K) avec un certain nombre de positions discrètes ($c_i$) et une distribution de positions ($x_i \in X$) pour l'utilisateur, connectée à la représentation (C) de la zone ; et un dispositif de calcul pour calculer les distances ($d_i \in D$) entre les positions discrètes ($c_i$) et le point donné (p) et pour calculer une valeur centrale représentative statistiquement ($m_{central}$) à partir des distances ($d_k$) et de la distribution des positions ($x_k$).

**14.** Disposition selon la revendication 13, **caractérisée en ce que** les positions discrètes ($c_i$) sont distribuées uniformément dans la zone (K).

**15.** Disposition selon la revendication 13 ou 14, **caractérisée en ce que** le dispositif de calcul est disposé pour calculer la valeur centrale comme une valeur moyenne arithmétique des distances ($d_i$) pondérées par la distribution des positions (X) pour l'utilisateur.

**16.** Disposition selon la revendication 15, **caractérisée en ce que** le dispositif de calcul est disposé pour calculer la valeur centrale comme :

$$m_{central} = m_{moyen} = \sum_{i=1}^{T_m} x_i d_i$$

où $T_m$ est le nombre de positions dans C.

**17.** Disposition selon la revendication 13 ou 14, **caractérisée en ce que** le dispositif de calcul est conçu pour calculer la valeur centrale comme une valeur médiane des distances ($d_i$).

**18.** Disposition selon la revendication 17, **caractérisée en ce que** le dispositif de calcul est disposé pour calculer la valeur centrale en triant le montant D d'un ordre de taille à créer le montant ordonné $D_{ordonné}$ avec un indexage qui est représenté par le vecteur $V = \{v_1, v_2, ..., V_{Tm}\}$, à sommer ensuite :

$$h = \sum_{i=1}^{\zeta} x_{v_i}$$

où $\zeta$ est un entier tel que h est plus près de 0,5 que pour toutes les autres valeurs possibles de $\zeta$, et créer

la valeur centrale comme :

$$m_{central} = m_{médian} = d_\zeta$$

ou, si h est tout aussi proche de 0,5 pour deux valeurs subséquentes de $\zeta$, qui sont désignées ici $\zeta_1$ et $\zeta_2$, créer la valeur centrale comme :

$$m_{central} = m_{médian} = \frac{d_{\zeta_1} + d_{\zeta_2}}{2}$$

**19.** Disposition selon la revendication 13 ou 14, **caractérisée en ce que** la distribution de positions (X) pour l'utilisateur est disposée uniformément pour l'entière représentation (C) de la zone (K).

**20.** Disposition selon la revendication 19, **caractérisée en ce que** le dispositif de calcul est disposé pour calculer la valeur centrale comme une valeur moyenne arithmétique des distances ($d_i$).

**21.** Disposition selon la revendication 20, **caractérisée en ce que** le dispositif de calcul est disposé pour calculer la valeur centrale comme :

$$m_{central} = m_{moyen} = \frac{1}{Tm} \sum_{i=1}^{T_m} d_i$$

où $T_m$ est le nombre de positions dans C.

**22.** Disposition selon la revendication 19, **caractérisée en ce que** le dispositif de calcul est disposé pour calculer la valeur centrale comme la valeur médiane des distances ($d_i$).

**23.** Disposition selon la revendication 22, **caractérisée en ce que** le dispositif de calcul est disposé pour calculer la valeur centrale en triant le montant D d'un ordre de taille à créer le montant ordonné $D_{ordonné}$ avec un indexage qui est représenté par le vecteur $V = \{v_1, v_2, ..., v_{Tm}\}$, et créer la valeur centrale comme :

$$m_{central} = m_{médian} = d_\zeta$$

où $\zeta$ est un entier tel que

$$\zeta = \frac{Tm + 1}{2}$$

pour toutes les valeurs impaires de Tm, et pour créer la valeur centrale comme :

$$m_{central} = m_{médian} = \frac{d_{\zeta_1} + d_{\zeta_2}}{2}$$

$$\zeta_1 = \frac{Tm}{2}, \ \zeta_2 = \frac{Tm + 2}{2}$$

pour toutes les valeurs paires de Tm et $T_m$ est le nombre de positions dans C.

**24.** Disposition selon l'une quelconque des revendications 13 à 23, **caractérisée en ce que** la zone (K) a la forme d'une cellule circulaire, d'une cellule en forme de secteur, d'une partie de cellule circulaire, ou d'une partie de cellule en forme de secteur.

**25.** Programme d'ordinateur dans un dispositif pour le calcul des distances entre un utilisateur situé dans une zone (K) et un point donné (p), **caractérisé en ce qu'**il comprend des codes de logiciel adaptés pour exécuter les étapes de la procédure selon l'une quelconque des revendications 1 à 12.

**26.** Support pour programme d'ordinateur, **caractérisé en ce qu'**il stocke un programme d'ordinateur selon la revendication 25.

FIG 1A

FIG 1B

FIG 2A

FIG 2B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5390339 A
- US 5293642 A
- US 5884215 A
- US 6097336 A
- WO 0143482 A
- WO 0019743 A
- WO 0126393 A
- AU 741491